## Europäisches Patentamt
## European Patent Office
## Office européen des brevets

(11) Numéro de publication: **0 301 957**
**A1**

## DEMANDE DE BREVET EUROPEEN

(21) Numéro de dépôt: 88401941.5

(22) Date de dépôt: 26.07.88

(51) Int. Cl.⁴: **H 04 M 3/56**

(30) Priorité: 31.07.87 FR 8710902

(43) Date de publication de la demande:
01.02.89 Bulletin 89/05

(84) Etats contractants désignés:
**BE DE ES GB GR IT**

(71) Demandeur: **JS TELECOMMUNICATIONS**
**31, 32, quai de Dion Bouton**
**F-92811 Puteaux Cédex (FR)**

(72) Inventeur: **Picandet Jean**
**12, rue du Docteur Paquelin**
**F-75020 Paris (FR)**

(74) Mandataire: **Levesque, Denys et al**
**Cabinet Beau de Loménie 55, rue d'Amsterdam**
**F-75008 Paris (FR)**

(54) Procédé et circuit de gestion d'audioconférence.

(57) Le circuit est du type comprenant n voies d'entrée (1) recevant des signaux de parole en provenance de n participants et n voies de sortie (2) de retour de parole sur lesquelles sont réémis des signaux de parole dérivés des signaux de parole reçus en entrée, ainsi que des moyens détecteurs (9) pour déterminer périodiquement si, à un instant donné, chacun des participants est locuteur ou auditeur,

Selon l'invention, il est prévu des moyens sélecteurs coopérant avec les moyens détecteurs pour :
- transmettre vers un premier circuit tampon (14) le signal de parole émis par le locuteur détecté en premier lieu ;
- transmettre vers un second circuit tampon (15) le signal de parole émis par le locuteur détecté en deuxième lieu ;
- inhiber la transmission des signaux de parole correspondant aux n-2 autres participants, non détectés comme locuteurs ou éventuellement détectés comme locuteurs en surplus des premier et deuxième locuteurs ;
- transmettre en retour vers le deuxième locuteur le signal de parole reçu par le premier circuit tampon ;
- transmettre en retour vers le premier locuteur le signal de parole reçu par le second circuit tampon ; et
- transmettre en retour vers les n-2 autres participants un signal de parole correspondant à une somme des informations contenues dans les premier et second circuits tampon.

## Description

La présente invention concerne un procédé et un circuit de gestion d'une audioconférence entre au moins trois participants.

Une audioconférence est une conférence dans laquelle les participants, répartis dans des lieux géographiquement distincts, sont reliés entre eux par des circuits téléphoniques permettant la transmission de la parole et éventuellement d'autres signaux susceptibles d'être véhiculés par des circuits téléphoniques (signaux de télécopie par exemple).

Dans un premier mode de gestion d'audioconférence, dit "additif", chaque participant reçoit un signal résultant de la sommation des signaux émis par tous les autres participants.

Ce mode de gestion présente l'inconvénient que, dès que le nombre de participants devient élevé, les problèmes d'adaptation des lignes téléphoniques deviennent de plus en plus délicats ; de plus, le bruit parasite augmente et la complexité du logiciel permettant la gestion de l'audioconférence croît très rapidement. Un tel mode de gestion n'est donc adapté qu'à une audioconférence entre un nombre réduit de participants, de préférence trois ou quatre.

Dans un second mode de gestion connu, dit "à interblocage", on détecte si chaque participant est locuteur (c'est-à-dire s'il émet un signal contenant un code de parole ou un signal de parole d'intensité significative) ou auditeur (c'est-à-dire s'il n'émet pas de signal contenant un code de parole ou si le niveau du signal sur sa ligne est inférieur à un seuil minimal donné) et on réémet vers l'ensemble des auditeurs le signal de parole émis par le participant détecté comme locuteur ; si plusieurs participants sont détectés comme locuteurs, on compare la moyenne instantanée des niveaux de signal de chaque locuteur, on ne retient que le locuteur correspondant au niveau instantané de signal le plus élevé, et on réémet vers l'ensemble des autres participants (auditeurs et locuteur(s) n'ayant pas le signal le plus élevé) le signal de parole émis par le locuteur retenu.

Ce mode de gestion pallie les défauts du système additif, mais en revanche, au contraire du système additif, lorsqu'un participant intervient et prend la parole, il ne peut être interrompu par un autre participant que pendant un silence, puisqu'il est nécessaire pour sélectionner un autre locuteur que le locuteur initialement sélectionné revienne à l'état d'auditeur ; de plus et surtout, si un autre participant prend la parole à ce moment, le premier locuteur va se trouver isolé même s'il n'avait pas fini de parler, et devra attendre à son tour un silence du second locuteur pour intervenir à nouveau et reprendre la parole pour terminer son intervention.

En tout état de cause, ce système à interblocage ne permet qu'à une et une seule personne d'être entendue par l'ensemble des participants, ce qui rend très difficile un dialogue entre deux intervenants, chacun devant prévoir un silence à la fin de chaque phrase pour que son interlocuteur puisse prendre à son tour la parole ; en outre, si un tiers intervient à cet instant, le dialogue entre les deux premiers locuteurs est complètement interrompu du fait de l'intervention extérieure de cet autre participant.

La présente invention a pour objet un procédé et un circuit de gestion d'audioconférence permettant de pallier l'ensemble des inconvénients des deux systèmes connus, tels qu'on vient de les exposer.

A cet effet, le procédé de l'invention est caractérisé en ce que : si un seul locuteur est détecté parmi les n participants, le signal de parole qu'il émet est réémis vers tous les autres participants ; si un deuxième locuteur est détecté avant la fin de parole du premier locuteur, on réémet vers le deuxième locuteur le signal de parole émis par le premier locuteur, vers le premier locuteur le signal de parole émis par le deuxième locuteur, et vers les n-2 autres participants une somme des signaux de parole émis par les premier et deuxième locuteurs ; et si un troisième locuteur est détecté avant la fin de parole des premier et deuxième locuteurs, le signal de parole émis par ce troisième locuteur n'est pas réémis tant que l'un au moins des premier et deuxième locuteurs n'est pas revenu à l'état d'auditeur.

En d'autres termes, lorsqu'une personne parle seule, seul son canal de parole est réémis vers les autres participants, ce qui évite des adaptations de ligne et bruit; si un autre participant intervient alors, chacun des deux locuteurs entend parler son vis-à-vis, et les autres participants entendent simultanément les deux locuteurs en train de dialoguer.

De plus, si un tiers tente de s'immiscer dans le dialogue entre les deux locuteurs, son signal de parole est ignoré, de sorte que ce dialogue n'est pas interrompu. S'il intervient cependant au cours d'un silence dans le dialogue, son signal de parole est certes réémis vers les autres participants, mais il en est de même pour l'un des deux locuteurs initiaux, ce qui permet à ce dernier d'enchaîner une réponse à la suite de l'intervention du tiers.

L'invention porte également sur un circuit de gestion d'audioconférence permettant de mettre en oeuvre le procédé précité.

Ce circuit est d'un type comprenant n voies d'entrée recevant des signaux de parole en provenance des n participants et n voies de sortie de retour de parole sur lesquelles sont réémis des signaux de parole dérivés des signaux de parole reçus en entrée, et des moyens détecteurs pour déterminer périodiquement si, à un instant donné, chacun des participants est locuteur ou auditeur.

Selon l'invention, le circuit est caractérisé par des moyens sélecteurs coopérant avec les moyens détecteurs pour : transmettre vers un premier circuit tampon le signal de parole émis par le locuteur détecté en premier lieu ; transmettre vers un second circuit tampon le signal de parole émis par le locuteur détecté en deuxième lieu ; inhiber la transmission des signaux de parole correspondant aux n-2 autres participants, non détectés comme locuteurs ou éventuellement détectés comme locuteurs en surplus des premier et deuxième locuteurs ; transmettre en retour vers le deuxième locuteur le signal de parole reçu par le premier circuit tampon ; transmettre en retour vers le premier locuteur le signal de parole reçu par le second circuit tampon ; et transmettre en retour vers les n-2 autres participants un signal de parole correspondant à une somme des informations contenues dans les premier et second circuits tampon.

Selon un certain nombre de caractéristiques préférentielles de l'invention :
- les moyens sélecteurs comprennent : un premier et un second bus de signal de parole, communs aux n voies ; pour chacune des n voies une mémoire de signal de parole et un circuit de commutation fonctionnant en réponse aux moyens détecteurs, recevant le signal en sortie de cette mémoire de signal de parole et capable, sélectivement, d'appliquer ce signal vers l'un ou l'autre des deux bus, ou d'en inhiber la transmission ; un circuit sommateur recevant sur chacune de ses deux entrées les signaux appliqués sur un bus respectif ; et deux mémoires, dont les entrées sont reliées respectivement au premier et au second bus, constituant le premier et le second circuits tampons ;
- la mémoire de signal de parole de chaque voie est un registre à décalage apportant au signal de parole reçu sur cette voie un retard égal au temps de réponse des moyens détecteurs ;
- les voies d'entrée et de sortie sont des voies multiplexées, des moyens démultiplexeurs et multiplexeurs étant prévus respectivement en entrée et en sortie de ce circuit.

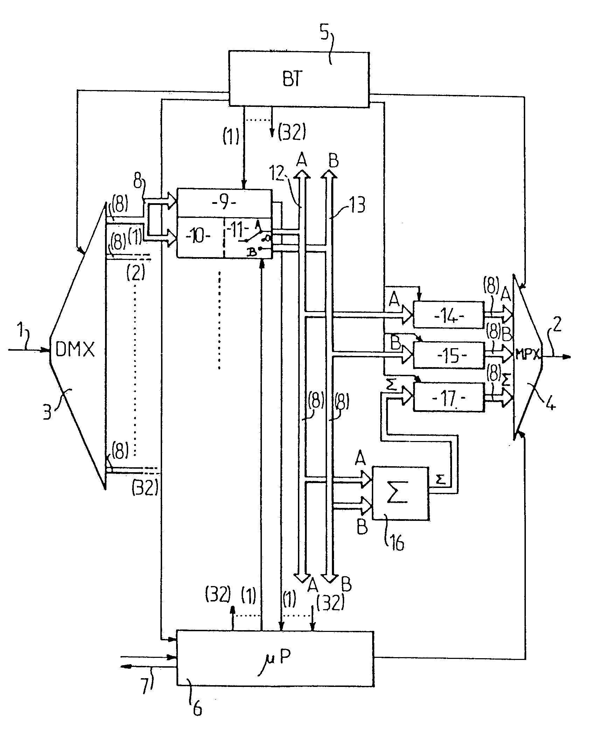

D'autres caractéristiques et avantages de l'invention apparaîtront à la lecture de la description détaillée ci-dessus d'un exemple de réalisation, en référence à la figure unique, qui représente un schéma par blocs d'un circuit de gestion d'audioconférence selon l'invention.

Sur la figure, la référence 1 désigne une ligne d'entrée série du circuit, qui est une ligne téléphonique acheminant une pluralité de signaux de parole en provenance de n participants par multiplexage numérique sous forme de trains de signaux acheminés soit en mode circuit commuté (voie temporelle) soit en mode paquet (circuit virtuel).

De la même façon, les voies de sortie sont acheminées par une ligne série 2 de sortie.

Un circuit de démultiplexage 3 permet de démultiplexer les différents canaux de parole et de présenter chacune des n voies en entrée (par exemple n = 32) isolément sous forme de mots parallèles (mots de 8 bits par exemple) caractéristiques du codage du signal de parole utilisé, par exemple un codage par modulation d'impulsions dit MIC.

Symétriquement, un circuit de multiplexage 4 reçoit sur chacune de ses entrées A,B,$\Sigma$ des octets parallèles qui sont traités de la manière décrite par la suite et réémis vers n voies en retour après codage approprié.

Le démultiplexeur 3 et le multiplexeur 4 fonctionnent tous deux sous le contrôle d'une base de temps générale 5 et d'un microprocesseur 6 dans la mémoire duquel on peut télécharger, par l'intermédiaire d'une ligne 7 de dialogue, une configuration particulière en fonction du mode souhaité de codage et de gestion de l'audioconférence.

Cette possibilité de configurer dynamiquement le circuit de gestion permet en particulier, avec un seul circuit tel que celui décrit, de gérer simultanément une pluralité d'audioconférences, chaque audioconférence regroupant un nombre quelconque de participants (la seule limite est le nombre total de participants simultanés gérés pour l'ensemble des audioconférences en cours). Dans l'exemple illustré où le circuit de gestion comprend 32 voies, on peut ainsi gérer par exemple simultanément quatre audioconférences à trois participants, deux audioconférences à quatre participants, plus deux audioconférences à six participants, soit un total de huit audioconférences gérées simultanément, regroupant au total 32 participants (bien entendu, un très grand nombre d'autres combinaisons sont envisageables, dès lors que l'on ne dépasse pas la limite de 32 participants au total, quelque soit le nombre d'audioconférences en cours).

Chacune des voies ainsi isolée par le démultiplexeur 3 est appliqué par un bus de voie 8 d'une part à un détecteur de présence de code de parole 9, et d'autre part à une mémoire de signal de parole 10.

Le détecteur 9 peut être, selon les performances souhaitées, soit un simple sommateur de la valeur absolue de m précédents codes de parole définissant un niveau moyen sur ces m codes, soit un circuit à prédiction susceptible de reconnaître un signal vocal parmi des signaux perturbateurs (cas d'une audioconférence en ambiance bruyante).

Dès que le détecteur 9 reconnaît une suite de signaux de parole -c'est-à-dire, en d'autres termes, qu'il identifie le participant correspondant comme étant un locuteur-, il alerte le microprocesseur 6 chargé de la gestion d'ensemble du circuit. La mémoire 10 associée à ce détecteur est du type registre à décalage (c'est-à-dire du type "premier entré-premier sorti") et permet de retarder les signaux de parole reçus sur la voie correspondante d'une durée équivalente au temps mis par le détecteur 9 pour analyser la présence ou l'absence de code de parole.

La sortie de la mémoire 10 est appliquée à un circuit sélecteur 11 qui, sur commande du microprocesseur 6, soit isole ce signal (position notée "0" sur la figure), soit l'applique à un bus parallèle 12 A, soit l'applique à un bus parallèle 13 B.

Ces deux bus sont communs à l'ensemble des voies du circuit et reçoivent en entrée les signaux produits par les circuits sélecteurs de chacune des voies.

En sortie, le signal présent sur le bus A est appliqué à une première mémoire 14, et de même le signal présent sur le bus B est appliqué à une deuxième mémoire 15.

De plus, un circuit sommateur 16 permet, à tout instant, de faire la somme des signaux présents sur les bus A et B et d'appliquer le résultat obtenu $\Sigma$ à l'entrée d'une troisième mémoire 17.

Sous le contrôle du microprocesseur 6, le multiplexeur 4 reçoit les signaux en sortie de chacune des trois mémoires 14, 15 et 17, et émet sur la voie de sortie série 2 les codes des signaux de parole stockés dans les mémoires tampon 14, 15 et 17, selon un ordre prédéterminé correspondant à l'ordre relatif des voies de sorties.

On va maintenant expliquer la façon dont le microprocesseur 6 gère le circuit dont on vient de décrire la structure.

Tout d'abord, le microprocesseur 6 a reçu, par la ligne 7, les informations de configuration des voies d'entrée et des voies de sortie pour chacune des audioconférences à gérer.

Pour chaque audioconférence, le microprocesseur scrute, à la prise en compte de chaque arrivée de code de signaux de parole (typiquement, toutes les 125 µs), les états des différents circuits détecteurs 9 de présence de code de parole concernés par la conférence en question.

Si aucun code de parole n'est présent, aucun signal n'est envoyé vers les voies de sortie, les circuits sélecteurs 11 étant tous dans un état correspondant fonctionnellement à la position neutre "0".

Si un code de parole est détecté sur une voie, le signal correspondant est dirigé par l'intermédiaire du bus A et de la première mémoire 14 vers toutes les voies de sortie de l'audioconférence considérée, sauf vers celle qui correspond à la voie ayant émis ce signal de parole.

Si un code de parole est présent simultanément sur deux des voies, le signal de parole de la première voie active sera dirigé, via le bus A, vers la première mémoire 14, et celui correspondant à la seconde voie active sera dirigé, via le bus B, vers la deuxième mémoire 15. Le circuit sommateur 16 enverra la somme Σ des signaux recueillis sur les bus A et B vers la troisième mémoire 17. Le multiplexeur de sortie enverra le signal correspondant à cette somme vers toutes les voies de l'audioconférence considérée, sauf vers les deux voies reconnues comme actives en émission par le circuit détecteur 9 (c'est-à-dire les voies des deux locuteurs); ces deux dernières voies recevront respectivement le contenu de la deuxième mémoire 15 et de la première mémoire 14.

Si un code de parole est reconnu sur plus de deux voies, dès que le processus correspondant à deux voies actives aura été mis en place comme on vient de le décrire, le microprocesseur, qui conserve l'historique de cet état, maintiendra les liaisons précédemment établies sans modification.

Le microprocesseur procèdera ainsi pour chacune des conférences programmées.

Son cycle de scrutation sera suffisamment rapide pour que chaque apparition de nouveaux codes de parole en entrée (participants intervenant dans la conférence, et devenant donc locuteurs) puisse être prise en considération.

## Revendications

1. Un procédé de gestion d'une audioconférence entre n participants ($n \geqq 3$), dans lequel on détecte si chaque participant est locuteur ou auditeur et on réémet en retour vers les participants des signaux de parole fonction de cette détection,
caractérisé en ce que :
- si un seul locuteur est détecté parmi les n participants, le signal de parole qu'il émet est réémis vers tous les autres participants ;
- si un deuxième locuteur est détecté avant la fin de parole du premier locuteur, on réémet :
. vers le deuxième locuteur le signal de parole émis par le premier locuteur,
. vers le premier locuteur le signal de parole émis par le deuxième locuteur, et
. vers les n-2 autre participants une somme des signaux de parole émis par les premier et deuxième locuteurs ; et
- si un troisième locuteur est détecté avant la fin de parole des premier et deuxième locuteurs, le signal de parole émis par ce troisième locuteur n'est pas réémis tant que l'un au moins des premier et deuxième locuteurs n'est pas revenu à l'état d'auditeur.

2. Un circuit de gestion d'une audioconférence entre n participants ($n \geqq 3$) pour la mise en oeuvre du procédé selon la revendication 1, comprenant n voies d'entrée (1) recevant des signaux de parole en provenance des n participants et n voies de sortie (2) de retour de parole sur lesquelles sont réémis des signaux de parole dérivés des signaux de parole reçus en entrée, ce circuit comprenant des moyens détecteurs (9) pour déterminer périodiquement si, à un instant donné, chacun des participants est locuteur ou auditeur,
caractérisé par des moyens sélecteurs coopérant avec les moyens détecteurs pour :
- transmettre vers un premier circuit tampon (14) le signal de parole émis par le locuteur détecté en premier lieu ;
- transmettre vers un second circuit tampon (15) le signal de parole émis par le locuteur détecté en deuxième lieu ;
- inhiber la transmission des signaux de parole correspondant aux n-2 autres participants, non détectés comme locuteurs ou éventuellement détectés comme locuteurs en surplus des premier et deuxième locuteurs ;
- transmettre en retour vers le deuxième locuteur le signal de parole reçu par le premier circuit tampon ;
- transmettre en retour vers le premier locuteur le signal de parole reçu par le second circuit tampon ; et
- transmettre en retour vers les n-2 autres participants un signal de parole correspondant à une somme des informations contenues dans les premier et second circuits tampon.

3. Le circuit de gestion d'audioconférence de la revendication 2, dans lequel les moyens sélecteurs comprennent :
- un premier (12) et un second (13) bus de signal de parole, communs aux n voies ;
- pour chacune des n voies :
. une mémoire (10) de signal de parole,
. un circuit de commutation (11) fonctionnant en réponse aux moyens détecteurs (9), recevant le signal en sortie de cette mémoire de signal de parole et capable, sélectivement, d'appliquer ce signal vers l'un ou l'autre des deux bus, ou d'en inhiber la transmission ;

- un circuit sommateur (16) recevant sur chacune de ses deux entrées les signaux appliqués sur un bus respectif,

- deux mémoires, dont les entrées sont reliées respectivement au premier et au second bus, constituant le premier et le second circuits tampons (14,15).

4. Le circuit de gestion d'audioconférence de l'une des revendications 2 à 3, dans lequel la mémoire de signal de parole (10) de chaque voie est un registre à décalage apportant au signal de parole reçu sur cette voie un retard égal au temps de réponse des moyens détecteurs (9).

5. Le circuit de gestion d'audioconférence de l'une des revendications 2 à 4, dans lequel les voies d'entrée (1) et de sortie (2) sont des voies multiplexées, des moyens démultiplexeurs (3) et multiplexeurs (4) étant prévus respectivement en entrée et en sortie de ce circuit.

6. Le circuit de gestion d'audioconférence de l'une des revendications 2 à 5 dans lequel desdits moyens détecteurs (9) comprennent soit un sommateur (16) , soit un circuit à prédiction.

Office européen
des brevets

**RAPPORT DE RECHERCHE EUROPEENNE**

Numero de la demande

EP 88 40 1941

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 387 457 (MÜNTER) <br> * Colonne 1, ligne 60 - colonne 2, ligne 41; colonne 3, ligne 59 - colonne 4, ligne 36; figure 1 * <br> --- | 1-6 | H 04 M 3/56 |
| A | DE-A-3 206 914 (S.E.L.) <br> * Page 4, ligne 8 - page 5, ligne 3; page 6, ligne 1 - page 7, ligne 9; figure 1 * <br> --- | 1,2,4,5 | |
| A | US-A-3 958 084 (NICHOLAS) <br> * Colonne 2, lignes 39-58; colonne 3, ligne 60 - colonne 4, ligne 12; colonne 14, lignes 48-65 * <br> --- | 1,2 | |
| A | DE-A-3 515 646 (DEUTSCHE TELEPHONWERKE) <br> * Colonne 4, ligne 44 - colonne 5, ligne 8 * <br> --- | 1,2 | |
| A | US-A-4 479 211 (BASS et al.) <br> * Colonne 1, ligne 31 - colonne 2, ligne 33 * <br> ----- | 1,2 | **DOMAINES TECHNIQUES RECHERCHES (Int. Cl.4)** <br><br> H 04 M <br> H 04 Q <br> H 04 L |

**Le présent rapport a été établi pour toutes les revendications**

| Lieu de la recherche | Date d'achèvement de la recherche | Examinateur |
|---|---|---|
| LA HAYE | 06-09-1988 | BISCHOF J.L.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P0402)